# EUROPEAN PATENT SPECIFICATION

(11) **EP 1 527 432 B1**
(45) Date of publication and mention of the grant of the patent: **03.05.2006**
(21) Application number: 03763791.5
(22) Date of filing: 10.07.2003
(51) Int. Cl.: G08G 5/00

(54) **AVIONIC SYSTEM AND GROUND STATION FOR AIRCRAFT OUT OF ROUTE MANAGEMENT AND ALARM COMMUNICATIONS**
LUFTFAHRTSYSTEM UND BODENSTATION ZUR FÜHRUNG EINES FLUGZEUGS ABSEITS DES KURSES UND ALARMÜBERTRAGUNG
SYSTEME AVIONIQUE ET STATION AU SOL DESTINES A UN AVION HORS DE GESTION DE ROUTE ET DES COMMUNICATIONS D'ALARMES

(30) Priority: 10.07.2002 IT RM20020371
(43) Date of publication of application: 04.05.2005
(73) Proprietor: Marconi Selenia Communications S.P.A., 16153 Genova (IT)
(72) Inventor: PENNAROLA, Maurizio, Catello, I-00043 Ciampino (IT)
(74) Representative: Gervasi, Gemma
(86) International application number: PCT/EP2003/007486
(87) International publication number: WO 2004/008415

(56) References cited:
- WO-A-00/44580
- WO-A-03/023322
- US-A- 5 627 546
- US-A- 5 714 948
- US-B1- 6 392 692

## Description

This invention relates to an avionic system and a ground station for aircraft out of route management and alarm communications. More particularly, it relates to a system for handling events in case of deviations from the authorized flight paths and from the pre-set altitude or flight level or spatial limits, and automatically transmitting the onboard situation in real time to ground control stations when potentially dangerous events occur.

### Background Art

Out of route aircraft caused particularly serious events, including loss of life. This situation has been traditionally handled by equipping the plane with flight instruments able to display the real time situation to the pilots and to transmit to ground the security codes entered by the pilots. Given the inadequacy of said means to handle complex situations, the above mentioned avionic system and ground station allows civil aircraft to temporarily operate independently from the pilot, in order to protect the civilian population. This system allows the aircraft to automatical react to deviations from the authorized flight paths and from the pre-set altitude or flight level or spatial limits, and is able to convey the exact onboard situation in real time to ground control stations when potentially dangerous events occur such as pilot errors, particular atmospheric conditions, failures, chaos, hijackings, and so forth.

Document US5714948 discloses a satellite based air traffic control system with an aircraft unit on an aircraft which transmits aircraft identification information, GPS data, aircraft status information, and a transmit detect code to the ATC facility to allow the ATC to track the aircraft and identify the aircraft communicating on two-way radio. The traffic control system and a flight control system utilizing GPS may be used for aircraft in the air and on the ground. It may be used for ships, boats, automobiles, trains or railroads, and aircraft. This system, however, does not take into account terrorists acts or hijackings with suicide objectives.

### Summary of the Invention

It is the main object of this invention to provide an avionic system and ground station for aircraft out of route management and alarm communications that is able to actively control the aircraft route and convey the onboard situation to ground stations in the event of an alarm, effectively increasing aircraft safety and security for passengers population and residential areas benefit.

It is another object of the invention to provide system that can be easily installed and used on aeroplanes, in compliance with commercial aviation regulations.

These objects, and others that shall become readily apparent from the following description, are met according to a first aspect of the invention, an avionic system for aircraft out of route management and alarm communication with the features of claim 1 and, in accordance with another aspect of the invention by means of a method for aircraft out of route management according to claim 9.

The above functions are performed by an avionic device (which will be certified for flight) and are suitable for improving the day-to-day flight safety, increasing the passengers and the civilian population safety. Implementing the solution in accordance with the invention following targets has significant advantages: maximum possible safety for the passengers; real time alarms detection and appropriate reactions; appropriate emergency handling; automalic event detection independently from human intervention; reliable processing of alarm signals and secure communication with ground control stations; standardized interfaces to allow installation on the greatest possible number of aeroplanes.

The above functions and targets are achieved by means of a system consisting of different elements: an avionic device, which carries out "collision avoidance" and "alarm" functions; suitable sensors and on board transmitters; a ground control station composed of computing systems. The device it installed in a specific protected housing of the aircraft; it is not accessible and cannot be disabled from the cockpit.

The first function, "collision avoidance", is performed in the device and intervenes temporarily and independently of the pilot as soon as the aircraft deviates from the pre-set flight path, regardless of the causes. This could occur, for example, it the aircraft flies, in not allowed directions or descends below the altitudes/flight levels authorized by the air-traffic control regulations. The second function, "alarm", is also performed in the device and enables the above mentioned ground control stations to receive all the necessary information from the aircraft (for example, routes data and images) for carrying out appropriate evaluations when potentially dangerous events occur.

Further advantages of the invention shall be readily apparent from the more detailed description of a particular embodiment of the invention; given as a nonlimiting example with reference to the following accompanying drawings:
Figure 1 and 2 show a schematic diagram of an aircraft that uses the system of the invention
Figure 3 shows a schematic diagram of a runway, which shows approaching aeroplane limits and gives an environment indication related to the system of the invention.

### Description of a preferred embodiment

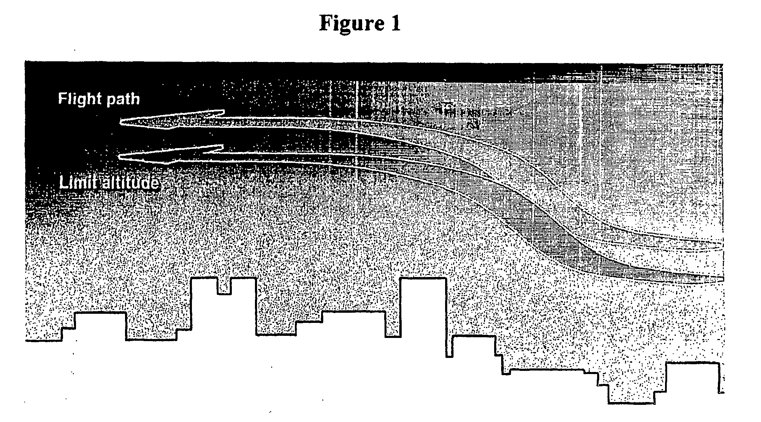

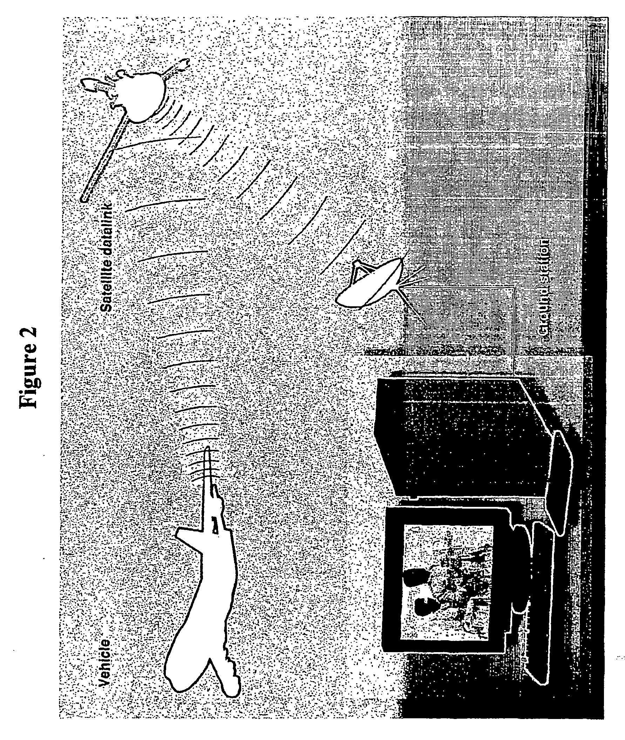

Figure 1 shows an aircraft that uses the system of the invention. The authorized flight path is the upper one; the permissible limits for said flight path are also shown - if the aircraft descends below these limits, the system automatically intervenes temporarily by making the aircraft climb to the above said altitude limit and informing the ground control stations of the alarm condition (Figure 2).

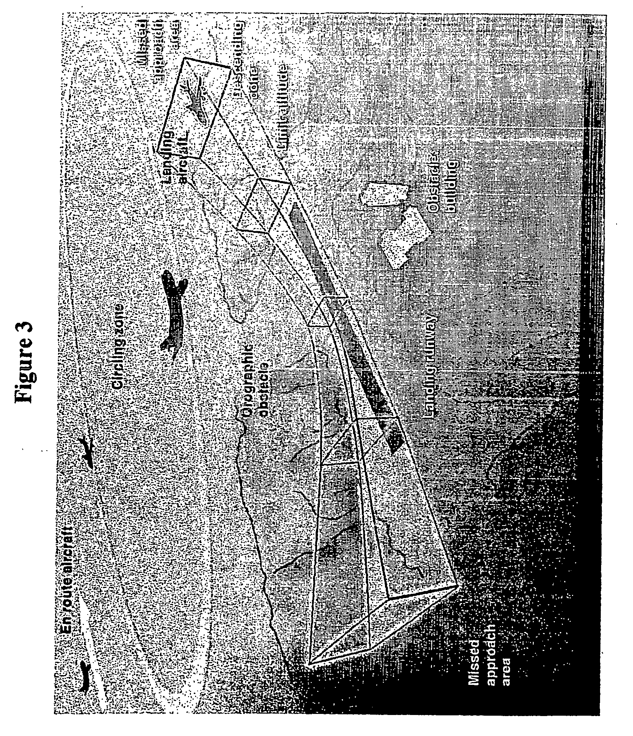

Figure 3 shows a schematic diagram of an airport runway. The virtual cones set the spatial limits for containing the flying aircraft - if the aircraft descends below these, limits, the system automatically temporarily intervenes making the aircraft climb to a defined limit altitude and informing the ground control stations of the alarm condition. To maximize safety the system properly considers the land orography, buildings, nearby aircraft, the missing approach volumes and the authorized circling areas.

The system, in accordance with the invention, is composed by an avionic device installed onboard commercial and general aviation aircraft, several sensors and transmitters installed in appropriate points of the aircraft, and connections between said sensors and the avionic device. The system exchanges information with ground control stations specifically designed to handle the data transmitted from the aircraft and to perform secure communication with the avionic device.

The avionic device comprises a CPU (Central Processor Unit) suitable for handling all the data at the required processing speed, specific software, electronic components; it has memory devices suitable for storing the world flight paths data and relevant limits, the world's airports positions and relevant limits, any other required data; input and output interfaces suitable for exchanging the required information and data between the aircraft, other nearby aircrafts and the ground control stations.

The "collision avoidance" function, which is one of the functions carried out by the avionic device, is not only used to avoid collisions when the aircraft is flying, but also during landing and take-off. When controlling the aircraft route, the unit operates based on the global authorised minimum cruising altitudes and flight levels, the so-called "limits", covering every area of the globe, always in compliance with all the civil aviation regulations, including the ICAO ones. As a non limiting example, when the aircraft is out of route or descends below the said limits (see Figure 1), the unit automatically temporarily intervenes through appropriate connections with the unit itself, the autopilot and the navigation system.

During take-off and landing, the unit operates by creating virtual cones that delimit air space and considering the land orography, the flying and ground obstacles, and all other data of interest (as shown schematically in Figure 3); these data for every area of the globe are stored in the storage unit of the system as necessary. The "collision avoidance" function is carried out through two stages, In the first stage, the so-called "monitoring stage", the unit constantly compares the position of the aircraft with the pre-set and stored authorized limits. The unit continuously receives the data through its interfacing with the navigation system of the aircraft and its sensors. The limits depend on the flight areas, the applicable regulations, the man-built constructions, obstacles and many other factors. For example, the stored data includes the coordinates of all the world's airports and all the landing and take-off procedures established in compliance with the ICAO regulations. All the necessary information is kept up to date in real time, so that any changes to the above parameters are considered when competent authorities or aeronautical bodies change it, and this is accomplished through appropriate automatic updating procedures performed connecting the unit to ground control stations through data links (links described in the alarm function).

In the second stage, the so-called "control stage", when the aircraft deviates from the authorized limits the unit intervenes automatically on the autopilot; through the aforementioned interfaces, to take the aircraft to its spatial limit.

The preferred version of the aircraft out of route management system is as follows: in the monitoring state, it allows all the aircraft flying at altitudes or flight levels higher than the pre-set limit (established by the ICAO regulations for the different flight paths) to stay under the direct pilot control, also allowing flight path changes above the limit altitude or flight level (alarms will be generated only in case of big flight path changes), The transition to the control state only occurs if the aircraft leaves its route to fly in unauthorised directions or descend below the pro-set limit. In this case, the unit temporarily takes control of the aircraft, through the collision avoidance function, to make the aircraft climb to the pre-set limit. Once the safety limits have been restored, the system gives the control back to the pilot.

The preferred version of the collision avoidance function during landing and take-off is as follows: for each airport two virtual cones (one in the landing direction and one in the take-off direction) are designed via software, in compliance with the instrument approach procedure, the missed approach procedure and virtual circling areas for the concerned runways. When the aircraft is involved in landing or take-off phases, the unit may also command the autopilot and temporarily take the control of the aircraft to place it in a predetermined position at a safety height. For example, this can occur in the following cases:
- If during the approach procedure in the landing cone the aircraft suddenly flies below the cone limits (alarms will be generated if it flies out of the cone above the limits);
- If the aircraft flies at a speed considered incompatible with the landing and missed approach procedures;
- If during climbing or after flying over the runway, the aircraft suddenly flies below the cone limits (alarms will be generated if it flies out of the cone above the limits). The collision avoidance function is constantly able to compute the optimal climbing flight path and speed to avoid crashing to a ground or air obstacle. It accomplishes this by using its and other aircraft speed and position, the protection areas, the orography of the land, the artificial obstacles placed near airports, and any other required information available on board through the a.m. interfaces.

Additionally other interfaces are foreseen in the unit; interfaces with sensors to receive row signals in order to calculate automatically an independent present position, interfaces with the navigation system to get the present position signals already computed by other equipment in order to check the accuracy of the data.

The collision avoidance system may be optionally doubled to make the system even more reliable.

The second main function carried out by the avionic device, the so-called "alarm function", is to allow communication between the aircraft and ground control stations or other aircraft. The "alarm function" is also carried out through two stages.

The first, the so-called "monitoring stage", consists in collecting information on the aircraft onboard situation and storing it in the memory unit. This information is not automatically transmitted to the ground control stations. In the second stage, the so-called "alarm stage", which is activated in cases of alarm, the unit transmits the information generated onboard the aircraft to the ground control stations for appropriate evaluation.

To carry out the alarm function, in addition to the avionic unit described above, it is required to install on board additional devices, such as miniature surveillance video cameras, miniature transmitters that can be worn by the flight crew, switches, cockpit locking systems, specific interfaces, and an appropriate communications system. Suitable ground control stations complete the system. Other devices may also be connected when required by regulations or airline specifications.

A preferred description of the process carried out by the avionic unit to fulfil the alarm function is given below. In the monitoring stage, the avionic unit has a "surveillance" role and constantly communicates with the video cameras and sensors onboard the aircraft. It records the images and the required information at pre-determined time intervals, and stores the information and data for a pre-determined amount of time. In this stage, through interfaces with the collision avoidance function, the unit constantly compares the position of the aircraft with the expected route in the flight plan; furthermore, the unit continuously automatically checks its functions. The system enters the pre-alarm state if a hijacking or terrorist act is detected by the sensors or the flight crew, if there is a significant deviation from the flight plan or if the cones areas are not respected. In this state, a validation request is sent to the nearest ground control station. If this is not validated within the predetermined time interval by the ground control station, the unit will automatically pass from the monitoring state to the alarm state. It goes directly in alarm state if the aircraft flies below the a.m. flight limits.

In the alarm stage, the unit constantly transmits the aircraft navigation data and other data (for example, images) to ground control stations, and receives messages to the flight crew and passengers. Both in the monitoring and in the alarm state, the unit works independently of the pilot and, in the event of attested terrorist events, it automatically communicates any necessary data to the ground control stations. Appropriate measures will be implemented so that, even in the case of mechanical damage to the onboard instruments or wiring, the unit is not affected.

The unit has its interfaces with the onboard systems and with the aircraft communications system in order to communicate all the necessary data with the ground control stations.

The system comprises a number of miniature surveillance video cameras, which are installed in appropriate positions depending on the size of the aircraft and are wired to the alarm unit. During the monitoring state, the video cameras automatically send a signal if they have been disabled, damaged, or covered. The video cameras transmit the images constantly both to the cockpit and to the unit. The system comprises several sensors appropriately connected to the alarm unit installed in the aeroplane in appropriate positions depending on the size of the aircraft. Preferred sensors are "radio controlled" crew wearable miniature transmitters that can be operated with switches. These are "radio controlled" heart rate monitors for the pilots, switches on board usable by the flight crew. The flight crew may manually activate the sensors, sending different impulses to the avionic unit in the event of hijacking or a terrorist act; these transmitters are equipped with switches and have specific protective mechanisms to protect against false alarms. Furthermore, switches are located in places that may be accessed by the passengers as well. Optionally, in case of alarm the unit could automatically lock access to the cockpit.

The system is completed with suitable ground control stations. Preferably, these do not receive information during the monitoring state of the unit. In the pre-alarm state or when the alarm state is confirmed, the ground control stations receive, from the concerned aircraft flying in their range, both the information registered before the alarm event and real time information from the aircraft. The ground control stations will perform the following preferred procedure: provide the received information to the competent authorities; continuously check the correctness of the flight parameters of the aeroplanes under their control when in the pra-alarm state and alarm state; constantly check the aeroplane onboard situation during hijacking and promptly relay the needed information. An adequate number of ground control stations will be located for the proper management of the system in the locations deemed necessary by the national authorities. The stations will include at least the following systems: adequately powerful computers with specifications suitable for the functions to be performed, a receiver-transmitter radio system, an encryption and coding system, an audio-visual-data communications system. The onboard/ground/onboard transmission of the information will be performed preferably through a data link connection managing audio, data radar and video signals and featuring an encryption and coding system capable to provide high resistance to jamming. Transmitted data will be sent with a suitable data format on appropriate transmission frequencies and with adequate waveforms. Spread spectrum techniques (Frequency Hopping or Direct Sequency) will be also considered to improve the quality, security, and reliability of the transmission and to avoid interference with other radio transmissions.

To avoid possible collisions with other aeroplanes in the collision avoidance function (or in the alarm state) when the autopilot is bringing the aircraft to the pre-set spatial position at a certain altitude or flight level, the system will be provided with the nearby aircraft position. For example, to accomplish this, the unit may receive information coming from General Aviation systems such as the Automatic Dependent Surveillance (ADS) system, which is able to transmit the aircraft position via radio link, or can receive data detected by ground radars, which will transmit them to the concerned aircraft in the most appropriate way (for example, through the a.m. ground control station).

To increase connectivity and minimize the number of ground control stations, the system may also operate through a specific satellite Wide Band Data Link connection. This will allow the aircraft to be monitored when flying over open oceans and improve the transmission of images in terms of speed and size, which could be very slow if a radio band is used.

Optionally, appropriate measures may be implemented in the unit to electronically scan the on board images (for example, to automatically detect the presence of firearms). Optionally, narcotic or poisonous gas detectors may be installed on board.

The system also provides a function for handling the emergencies. This considers both the possibility that, the system may be disabled under the threat of arms and the need for the pilot to immediately intervene in the critical phases of a real emergency. To achieve the first objective the system always works automatically, and cannot be disabled by the pilot. In case of alarm the system sends messages, incuding diabling codes. The use of secure radio bands guarantees a secure connection with the ground control stations and makes it possible for the aircraft to send automatically, if the alarm event is triggered, standard messages that inform the competent authorities of the onboard situation and to receive any disabling signals from ground. For this reason it is possible to confirm the disabling of the entire system from a ground control station or from another aircraft after checking the received messages (example images). This covers the risk that the system may be shut down by accident, by "expert" telecommunications terrorists, or under threat of weapons.

To achieve the second objective, it is necessary to automatically disable the system through the avionic unit. A list of possible technical-operational-structural serious emergencies to be stored in the unit (for example, engine failure) must be prepared. Real signals need to be received by the unit through specific interfaces with the onboard systems. When these emergencies occur, a specific software will immediately react, giving complete control to the pilot. The unit will then start communicating to the ground station, sending the stored and real time data and asking for confirmation of the disabling code. In case of confirmation the unit is automatically disabled.

Thanks to the above characteristics and functions, the system of the invention provides real time information on the situation onboard the aeroplane and allows the aircraft to fly below the limit altitude or flight level only for taking off or landing, preventing the aircraft from descending to any point of the globe unless there is a real emergency on board. Thus, the system is able to manage an aircraft out of route, increasing the flight safety, providing to ground, through secure communication, the onboard situation in real time. In addition, the system increases the day-to-day flight safety since it provides an automatic service that prevents the aircraft from descending, even in the event of an error, below the minimum height established by the regulations, avoiding possible accidents due to human and/or environmental factors.

The system, thanks to the interfaces with the onboard systems, can optionally take the aircraft to an autonomous landing, depending on the aircraft and airport equipment configuration.

## Claims

1. An avionic system for aircraft out of route management and alarm communication comprising at least an avionic unit, located onboard an aircraft, provided with a memory unit for storing predefined information, electronic processing means for processing the received information and comparing it in real time with pre-set values, interfaces for receiving information from onboard systems and sending commands to an aircraft's autopilot to take over the control of the aircraft and return it to pre-set flight levels or spatial positions, sensors for obtaining data on the aircraft onboard situation, a communication system for transmitting the onboard situation in real time to a ground control station and for receiving from the ground control station, or from another aircraft, appropriate instructions when predetermined events occur, wherein the avionic unit is able to perform a collision avoidance function, to avoid collisions during aircraft flight, landing and take-off, wherein the collision avoidance function is carried out through a respective monitoring stage, during which the avionic unit constantly compares the position of the aircraft with pre-set and stored authorized limits, and through a control stage, in which when the aircraft deviates from the authorized limits, the avionic system intervenes automatically on the autopilot, through said interfaces, to bring back the aircraft within its spatial limit, **characterised in that** the avionic unit is able to perform an alarm function, wherein the alarm function is carried out through a respective monitoring stage, during which information on the situation onboard the aircraft is stored in the memory unit and is not automatically transmitted to the ground control station, and through an alarm stage which is activated in cases of alarm, in which the information generated onboard the aircraft by the avionic unit is transmitted to the ground control station for appropriate evaluation.

2. An avionic system according to claim 1, wherein said predefined information relates to flight paths, world's runways, orography of the land, obstacles and the pre-set values comprise flight paths and altitudes or flight levels.

3. An avionic system according to claim 2, wherein the aircraft sensors comprise surveillance video cameras and miniature transmitters, wearable by the flight crew, in order to obtain information for the avionic unit.

4. An avionic system according to claim 3, wherein the video cameras comprise means for establishing whether they have been disabled, damaged, or are malfunctioning.

5. An avionic system according to claim 4, wherein the sensors comprise heart rate monitors for the pilots to be connected to the avionic unit

6. An avionic system according to claim 4 comprising switches located in specific points of the aircraft available to crew and passengers to obtain information for the avionic unit, and a cockpit automatic locking system.

7. An avionic system according to claim 4 comprising means suitable for externally and/or automatically disabling the collision avoidance system in accordance to predefined rules in the event of an emergency.

8. An avionic system as claimed in one of the previous claims, comprising means for encrypting and coding the signals exchanged between the aircraft and the ground control station not interfering with the radio band communications.

9. Method for aircraft out of route management comprising the following steps performed by an avionic system according to claim 1.
- Defining first data, relating to flight paths, world's runways, orography of the land, obstacles and pre-set values comprising flight paths and altitudes or flight levels in particular for setting a collision avoidance function and loading said first data into the aircraft avionic unit,
- Defining second data, relating to aircraft pre-set flight path and authorized altitude and flight limits, for an alarm function and loading said second data into the aircraft avionic unit,
- Defining third data for at least one ground control station and loading said third data into the station,
- providing interfaces,
- providing communication channels and their respective properties,
- providing sensors, transmitters, switches, and video cameras on board the aircraft,
- Determining operating logics of the collision avoidance function and their implementation in the avionic unit, based on comparison of said first data with the position of the aircrafts.
- Determining operating logics of the alarm function and their implementation in the avionic unit; based on comparison of said second data with an actual position of the aircraft,
- Determining operating logics of the ground control station and loading them into the station, comparing the position of the aircraft constantly with pre-set and stored authorized spatial limits intervening automatically on the autopilot to take the aircraft to its authorized spatial limits through the interfaces when the aircraft deviates from the authorized spatial limits in particular to its minimum cruising altitude and flight level, storing the situation onboard the aircraft in the memory unit and not automatically transmitting it to the ground control station, transmitting said information generated onboard to the ground control station for appropriate evaluation when an alarm stage is activated in cases of alarm.

10. Method according to claim 9 wherein electronic processing means process received information and compare it in real time with data referring to pre-set flight paths and allowed altitudes or flight levels, and wherein the interfaces receive flight information from onboard systems and send commands to the aircraft's autopilot to take over the control of the aircraft and bring it back to pre-set altitudes or flight levels or spatial positions, and wherein sensors obtain data on the situation onboard the aircraft, and wherein the communication means and the connecting interfaces transmit information relating to the onboard situation in real time to the ground control station and receive appropriate instructions from the ground control station or from another aircraft when predetermined events occur.

## Patentansprüche

1. Luftfahrtsystem zur Führung eines Flugzeugs abseits vom Kurs und zur Alarmübertragung, welches umfasst: mindestens eine an Bord eines Flugzeugs befindliche Avionikanlage, welche mit einem Speicher zum Speichern von vorher festgelegten Informationen, elektronischen Datenverarbeitungsmitteln zur Verarbeitung von empfangenen Informationen und zu ihrem Vergleich mit vorher eingestellten Werten im Echtzeitmodus, Schnittstellen zur Aufnahme von Informationen von Bordsystemen und Abgabe von Befehlen an einen Flugzeug-Autopiloten zur Übernahme der Steuerung des Flugzeugs und Rückführung desselben auf die vorher festgelegten Flugflächen oder Raumpositionen und mit Sensoren für den Erhalt von Daten über die Situation an Bord des Flugzeugs ausgestattet ist; ein Datenübertragungssystem zur Übertragung der Situation an Bord im Echtzeitmodus an eine Bodenkontrollstation und zur Aufnahme von geeigneten Anweisungen von der Bodenkontrollstation oder einem anderen Flugzeug, wobei diese Avionikanlage imstande ist, eine Kollisionsverhütungsfunktion auszuüben, um während des Flugs des Flugzeugs, der Landung und des Abhebens Kollisionen zu vermeiden, wobei diese Kollisionsverhütungsfunktion während einer zugehörigen Überwachungsphase ausgeführt wird, während welcher die Avionikanlage ständig die Position des Flugzeugs mit vorher eingestellten und gespeicherten genehmigten Grenzwerten vergleicht, wohingegen während einer Kontrollphase, in welcher, wenn das Flugzeugs von den genehmigten Grenzwerten abweicht, das Avioniksystem automatisch in den Autopiloten über die genannten Schnittstellen eingreift, um das Flugzeug in seine räumliche Grenzen zurück zu bringen,
**dadurch gekennzeichnet, dass** die Avionikanlage imstande ist, eine Alarmfunktion auszuführen, wobei diese Alarmfunktion ausgeübt wird während einer zugehörigen Überwachungsphase, während welcher Informationen über die Situation an Bord des Flugzeugs in der Speicheranlage gespeichert und nicht automatisch an die Bodenstation gesendet werden, und während einer Alarmphase, welche in Fällen von Alarm aktiviert wird und während welcher die an Bord des Flugzeugs von der Avionikanlage generierten Informationen an die Bodenkontrollstation für deren zielgerichtete Auswertung gesendet werden.

2. Avioniksystem gemäß Anspruch 1, bei welchem die genannten vorher festgelegten Informationen die Flugrouten, weltweite Start- und Landebahnen, die Orografie des Landes und Hindernisse betrifft und die vorher eingestellten Werte die Flugrouten undhöhen oder Flugflächen umfassen.

3. Avioniksystem gemäß Anspruch 2, bei welchem die Flugzeugsensoren Videokameras zur Überwachung und Miniatursender umfassen, welche von der Flugzeugbesatzung getragen werden, um Informationen für die Avionikanlage zu erhalten.

4. Avioniksystem gemäß Anspruch 3, bei welchem die Videokameras Mittel enthalten, um festzustellen, ob sie außer Betrieb gesetzt oder beschädigt worden sind oder ob sie eine Funktionsstörung aufweisen.

5. Avioniksystem gemäß Anspruch 4, bei welchem die Sensoren Überwachungsvorrichtungen für die Herzfrequenz der Piloten umfassen, so dass diese an die Avionikanlage angeschlossen werden können.

6. Avioniksystem gemäß Anspruch 4, welches Schalter umfasst, die sich an spezifischen Stellen des Flugzeugs befinden und für die Besatzung und die Passagiere zugänglich sind, damit Informationen für die Avionikanlage erhalten werden, sowie ein automatisches Verriegelungssystem für das Cockpit.

7. Avioniksystem gemäß Anspruch 4, welches Mittel umfasst, die geeignet sind, das Kollisionsverhütungssystem gemäß vorher festgelegten Regeln von außen und/oder automatisch beim Auftreten eines Notfalls außer Funktion zu setzen.

8. Avioniksystem gemäß einem der vorhergehenden Ansprüche, welches Mittel umfasst, um die zwischen dem Flugzeug und der Bodenkontrollstation ausgetauschten Signale zu verschlüsseln und zu kodieren, ohne dass dabei die Kommunikation im Funkfrequenzbereich beeinträchtigt wird.

9. Verfahren zur Führung eines abseits vom Kurs befindlichen Flugzeugs, wobei dieses Verfahren die folgenden Schritte umfasst, die von einem Avioniksystem gemäß Anspruch 1 ausgeführt werden:
- Festlegung von primären Daten, welche die Flugrouten, die weltweiten Start- und Landebahnen, die Orografie des Landes, Hindernisse und vorher festgelegte Werte betreffen, wobei zu den Letzteren die Flugrouten und die Flughöhen oder -flächen gehören, insbesondere zum Einrichten einer Kollisionsverhütungsfunktion und zum Laden der genannten ersten Daten in die Avionikanlage des Flugzeugs,
- Festlegung von sekundären Daten, welche die vorher festgelegte Flugroute des Flugzeugs und die genehmigten Höhen- und Fluggrenzen betreffen, zum Einrichten einer Alarmfunktion und zum Laden der genannten sekundären Daten in die Avionikanlage des Flugzeugs,
- Festlegung von tertiären Daten für mindestens eine Bodenkontrollstation und Laden der genannten tertiären Daten in diese Station,
- Bereitstellung von Schnittstellen,
- Bereitstellung von Übertragungskanälen und ihren zugehörigen Eigenschaften,
- Bereitstellung von Sensoren, Aufnehmern, Schaltern und Videokameras an Bord des Flugzeugs,
- Festlegung der Betriebslogik der Kollisionsverhütungsfunktion und ihre Implementierung in die Avionikanlage auf der Grundlage des Vergleichs der genannten primären Daten mit der Position des Flugzeugs,
- Festlegung der Betriebslogik der Alarmfunktion und ihre Implementierung in die Avionikanlage auf der Grundlage des Vergleichs der genannten sekundären Daten mit der tatsächlichen Position des Flugzeugs,
- Festlegung der Betriebeslogik der Bodenkontrollstation und Laden derselben in die Station mit ständigem Vergleich der Position des Flugzeugs mit vorher eingestellten und gespeicherten genehmigten räumlichen Begrenzungen mit automatischen Eingriff in den Autopiloten, um das Flugzeug, wenn es von den genehmigten räumlichen Begrenzungen abweicht, über die Schnittstellen in seine genehmigten räumlichen Begrenzungen zu bringen, insbesondere auf seine minimale Flughöhe und Flugfläche, wobei die Situation an Bord des Flugzeugs in der Speicheranlage gespeichert und nicht automatisch an die Bodenkontrollstation übertragen wird, jedoch die genannte, an Bord generierte Information an die Bodenkontrollstation für die zielgerichtete Auswertung dann übertragen wird, wenn ein Alarm im Fall eines Alarmzustandes aktiviert wird.

10. Verfahren gemäß Anspruch 9, bei welchem elektronische Verarbeitungsmittel die empfangenen Informationen verarbeiten und sie im Echtzeitmodus mit Daten vergleichen, welche sich auf vorher eingestellte Flugrouten und zugelassene Höhen oder Flugflächen beziehen und bei denen die Schnittstellen Fluginformationen von Bordsystemen erhalten und Kommandos an den Autopiloten des Flugzeugs geben, um die Steuerung des Flugzeugs zu übernehmen und es zurück auf die vorher eingestellten Höhen oder Flugflächen oder räumliche Positionen zurück zu bringen, und in welchem Sensoren Daten über die Situation an Bord des Flugzeugs aufnehmen, und wobei die Übertragungsmittel und die verbindenden Schnittstellen Informationen, welche die Situation an Bord betreffen, im Echtzeitmodus an die Bodenkontrollstation senden und zweckdienliche Anweisungen von der Bodenkontrollstation oder von einem anderen Flugzeug erhalten, wenn vorher festgelegte Ereignisse auftreten.

## Revendications

1. Système d'avionique destiné à un aéronef ayant perdu le contrôle de route et la communication d'alarme comprenant au moins une unité d'avionique, située à bord d'un aéronef, dotée d'une unité de mémoire permettant de stocker des informations prédéfinies, un moyen de traitement électronique permettant de traiter les informations reçues et de les comparer en temps réel avec des valeurs pré-établies, des interfaces permettant de recevoir des informations à partir de systèmes embarqués et d'envoyer des commandes à un pilote automatique d'aéronef afin de prendre le contrôle de l'aéronef et de le ramener à des niveaux de vol ou à des positions spatiales pré-établies, des détecteurs permettant d'obtenir des données relatives à la situation à bord de l'aéronef, un système de communication permettant de transmettre la situation de bord en temps réel à une station de contrôle au sol et de recevoir à partir de la station de contrôle au sol, ou à partir d'un autre aéronef, des instructions appropriées quand des événements prédéterminés surviennent, dans lequel l'unité d'avionique est à même de réaliser une fonction anti-collision, afin d'éviter des collisions au cours du vol de l'aéronef, de l'atterrissage et du décollage, dans lequel la fonction anti-collision se déroule par le biais d'une étape respective de surveillance, au cours de laquelle l'unité d'avionique compare constamment la position de l'aéronef avec des limites autorisées pré-établies et stockées, et par le biais d'une étape de contrôle, dans lequel quand l'aéronef dévie des limites autorisées, le système d'avionique intervient automatiquement sur le pilote automatique par le biais desdites interfaces, afin de ramener l'aéronef dans sa limite spatiale, **caractérisé en ce que** l'unité d'avionique est à même de réaliser une fonction d'alarme, dans lequel la fonction d'alarme se déroule par le biais d'une étape respective de surveillance au cours de laquelle des informations relatives à la situation à bord de l'aéronef stockées dans l'unité de mémoire et qui ne sont pas transmises automatiquement à la station de contrôle au sol, et par le biais d'une étape d'alarme qui est actionnée dans des cas d'alarme, dans lequel les informations produites à bord de l'aéronef par l'unité d'avionique sont transmises à la station de contrôle au sol pour une évaluation appropriée.

2. Système d'avionique selon la revendication 1, dans lequel lesdites informations prédéfinies concernent des trajectoires de vol, des cartes des pistes d'aviation du monde, l'orographie du territoire, les obstacles, et où les valeurs pré-établies comprennent des trajectoires de vol et des altitudes ou des niveaux de vol.

3. Système d'avionique selon la revendication 2, dans lequel les détecteurs d'aéronef comprennent des caméras de vidéosurveillance et des émetteurs miniatures, susceptibles d'être portés par l'équipage en vol, afin d'obtenir des informations destinées à l'unité d'avionique.

4. Système d'avionique selon la revendication 3, dans lequel les caméras vidéo comprennent des moyens d'établir si elles ont été déconnectées, endommagées ou si elles sont en dysfonctionnement.

5. Système d'avionique selon la revendication 4, dans lequel les détecteurs comprennent des appareils de surveillance du rythme cardiaque pour que les pilotes soient reliés à l'unité d'avionique.

6. Système d'avionique selon la revendication 4, qui comporte des commutateurs situés en des points spécifiques de l'aéronef et permettant à l'équipage et aux passagers d'obtenir des informations destinées à l'unité d'avionique, et un système de verrouillage automatique de poste de pilotage.

7. Système d'avionique selon la revendication 4, comprenant un moyen approprié pour déconnecter de façon externe et/ou automatique le système anti-collision conformément à des règles prédéfinies, en cas d'urgence.

8. Système d'avionique selon l'une quelconque des revendications précédentes, comprenant des moyens de cryptage et de codage des signaux échangés entre l'aéronef et la station de contrôle au sol, qui n'interfèrent pas avec les communications de bande radio.

9. Procédé destiné à un aéronef ayant perdu le contrôle de route, comprenant les étapes suivantes réalisées par un système d'avionique selon la revendication 1 :
- le fait de définir des premières données relatives aux trajectoires de vol, aux cartes des pistes du monde, à l'orographie du territoire, aux obstacles et à des valeurs pré-établies comprenant des trajectoires de vol et des altitudes ou des niveaux de vol, en particulier en vue d'établir une fonction anti-collision et de charger lesdites premières données dans l'unité d'avionique de l'aéronef,
- le fait de définir des deuxièmes données relatives à une trajectoire de vol pré-établie d'aéronef et des limites autorisées d'altitude et de vol, afin d'obtenir une fonction d'alarme et le chargement desdites deuxièmes données dans l'unité d'avionique d'aéronef,
- le fait de définir des troisièmes données relatives à au moins une station de contrôle au sol et de charger lesdites troisièmes données dans la station,
- la mise en oeuvre d'interfaces,
- la mise en oeuvre de canaux de télécommunication et de leurs caractéristiques respectives,
- la mise en oeuvre de détecteurs, d'émetteurs, de commutateurs et de caméras vidéo à bord de l'aéronef,
- le fait de déterminer des logiques de fonctionnement de la fonction anti-collision et leur implémentation dans l'unité d'avionique, fondée sur une comparaison desdites premières données avec la position de l'aéronef,
- le fait de déterminer des logiques de fonctionnement de la fonction d'alarme et leur implémentation dans l'unité d'avionique, fondée sur une comparaison desdites deuxièmes données avec une position réelle de l'aéronef,
- le fait de déterminer des logiques de fonctionnement de la station de contrôle au sol et de les charger dans la station, de comparer constamment la position de l'aéronef avec les limites spatiales autorisées pré-établies et stockées intervenant automatiquement sur le pilote automatique afin de conduire l'aéronef vers ses limites spatiales autorisées par le biais des interfaces quand l'aéronef dévie des limites spatiales autorisées, en particulier à son niveau minimal d'altitude de croisière et de vol, de stocker la situation à bord de l'aéronef dans l'unité de mémoire et de ne pas la transmettre automatiquement vers la station de contrôle au sol, de transmettre lesdites informations produites à bord vers la station de contrôle au sol pour une évaluation appropriée quand une étape d'alarme est actionnée en cas d'alarme.

10. Procédé selon la revendication 9, **caractérisé en ce que** le moyen de traitement électronique traite les informations reçues et les compare en temps réel à des données relatives à des trajectoires de vol pré-établies et à des altitudes ou à des niveaux de vol permis, et **caractérisé en ce que** les interfaces reçoivent des informations de vol issues de systèmes embarqués et envoient des commandes au pilote automatique d'aéronef pour prendre le contrôle de l'aéronef et le ramener à des altitudes ou à des niveaux de vol préétablis, et **caractérisé en ce que** les détecteurs obtiennent des données relatives à la situation à bord de l'aéronef, et **caractérisé en ce que** le moyen de communication et les interfaces de connexion transmettent des informations relatives à la situation à bord en temps réel à la station de contrôle au sol et reçoivent des instructions appropriées depuis la station de contrôle au sol ou d'un autre aéronef quand des événements prédéterminés surviennent.
